# EUROPEAN PATENT APPLICATION

(11) **EP 4 297 248 A1**
(43) Date of publication of application: **27.12.2023**
(21) Application number: 22183974.9
(22) Date of filing: 08.07.2022
(51) Int. Cl.: H02K 3/52, H02K 5/22, H02K 11/33

(54) **CONNECTOR FOR ELECTRICALLY CONNECTING AN ELECTRIC MOTOR AND AN INVERTER AND ARRANGEMENT, COMPRISING AN ELECTRIC MOTOR AND INVERTER**

(30) Priority: 20.06.2022 EP 22179804
(71) Applicant: Valeo eAutomotive Germany GmbH, 91056 Erlangen (DE)
(72) Inventor: Haas, Bernd, 91056 C/o VSeA, Erlangen (DE); Dieterich, Sebastian, 97616 C/o VSeA, Siemensstr. 15, Bad Neustadt a.d.Saale (DE); Hofmann, Bianca, 97616 C/o VSeA, Siemensstr. 15, Bad Neustadt a.d.Saale (DE); Root, Wladislav, 97616 C/o VSeA, Siemensstr. 15, Bad Neustadt a.d.Saale (DE); Fürstenhöfer, Christian, 91056 C/o VSeA, Erlangen (DE)
(74) Representative: Valeo Powertrain Systems

(57) **Abstract**

Connector (1) for electrically connecting an electric motor (15) and an inverter (14), comprising several conductors (2), wherein each conductor (2) is assigned to a phase of the electric motor (15), wherein the conductors (2) are S-shaped, wherein one end section (3) of a conductor (2) is connectable to the inverter (14) and the other end section (4) of the conductor (2) is connectable to the electric motor (15). In addition, an arrangement, comprising an electric motor (15) and an inverter (14), which are electrically connected by the connector (1), is proposed.

## Description

The invention relates to a connector for electrically connecting an electric motor and an inverter, comprising several conductors, wherein each conductor is assigned to a phase of the electric motor.

Electric machines are increasingly being used in electrically powered vehicles and hybrid vehicles, predominantly as an electric motor for driving a wheel or an axle of a vehicle.

Such an electric motor is usually mechanically coupled to a gearbox for speed adjustment. In addition, the electric motor is usually electrically coupled with an inverter which generates an alternating voltage for operating the electric motor from a direct voltage supplied by a battery.

Conventionally, motor and inverter are connected by busbars, wherein for each phase of the electric motor a separate busbar is required. Busbars are usually made from copper, which is a relatively expensive material.

The invention is therefore based on the problem to provide a connection between motor and inverter, which requires less copper.

This problem is solved by a connector with the features of claim 1.

According to the invention a connector with S-shaped conductors is provided, wherein one end section of a conductor is connectable to the inverter and the other end section of the conductor is connectable to the electric motor.

The invention has the advantage that no interposed, separate or additional busbar is required. Instead, motor and inverter are directly connected by the inventive connecting system, whereby the necessary amount of copper is reduced and the arrangement of motor and inverter is more compact compared to conventional designs.

It is preferred that an S-shaped conductor comprises four or five bent sections, wherein the bending angle between two adjacent sections is at least approximately a right angle. Using an S-shaped conductor has the advantage that only a minimum of space is required.

Installation of the inventive connector is further simplified, when end sections of each conductor extend through a holder, in which the conductors are arranged spaced from each other. By using the holder it is guaranteed that each conductor remains at a correct position.

Preferably, the holder is manufactured by encapsulating the conductors with a plastic material, which electrically isolates the conductors from each other.

In a preferred embodiment of the inventive connector the holder comprises a sealing for each conductor. The sealing prevents intrusion of debris/fluids and air into the inverter. This sealing is configured to cover a hole formed by the holder and through which the conductor is inserted.

A fastening means, in particular a thread or a thread nut, is preferably provided on end sections on the inverter side of the conductors. The thread of the thread nut can be used for connecting the connector to a busbar using a screw.

Preferably, end sections of the connector on the motor side have a fork-like shape, wherein an angled central section is arranged between two outer prong-like sections. The fork-like shape of the end sections allows to connect end sections of the connector to hairpins of the electric motor by welding.

The invention further relates to an arrangement, comprising an electric motor and an inverter, which are electrically connected by an inventive connector.

By the inventive connector the electric motor and the inverter are connected directly, without an interposed busbar, so that the required amount of copper is reduced compared to conventional connections between motor and inverter.

Preferably, end sections on the inverter side of the conductors are connected to the inverter by screw connections and/or end sections on the motor side of the conductors are welded to hairpins of the electric motor.

According to the invention, motor and inverter can be received in a central housing, wherein the connector closes and seals an opening of the central housing. In this case the central housing does not require an additional cover.

According to an embodiment of the invention, there exists an additional sealing material between the holder and the sealing and another additional sealing material between the sealing and the conductor in assembled situation. Between the holder and the sealing, the additional material is located near the hole. This additional sealing material can be solid or liquid and can also prevents that debris like oil or cooling fluid from the electric motor can enter the inverter through the connector. According to a preferred embodiment of the inventive arrangement at least a part of the connector is impregnated by dipping into a coating bath.

The invention is explained by means of a preferred example with reference to the drawings. The drawings are schematic representations and show:
Fig. 1 a perspective view of an inventive connector with a sealing;
Fig. 2 another perspective view of the connector of Fig. 1;
Fig. 3 a side view of the connector of Fig. 1;
Fig. 4 another view of the connector; and
Fig. 5 a detail of an arrangement comprising an electric motor and an inverter.

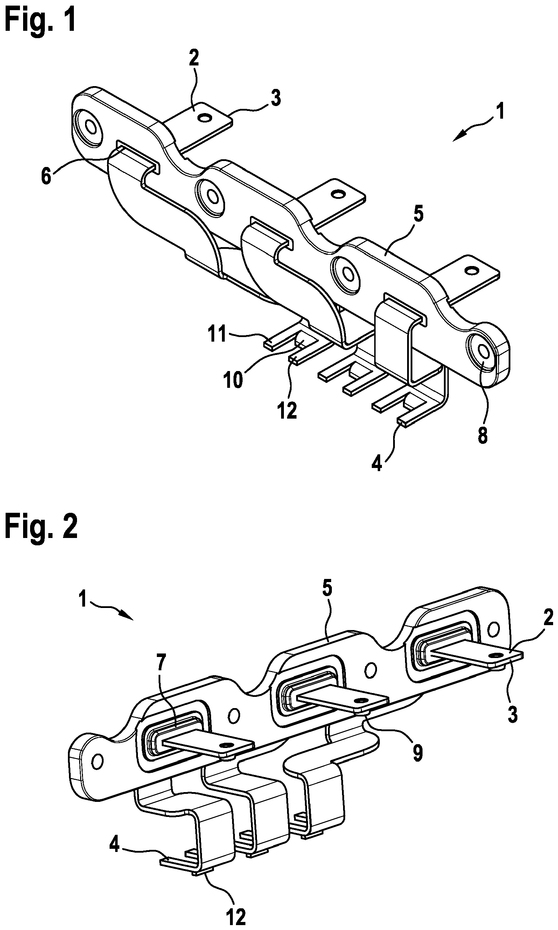

Fig. 1 - 4 show different views of a connector 1, which is configured to electrically connect an electric motor and an inverter. In this embodiment the connector 1 comprises three conductors 2, whereby each conductor 2 is assigned to a phase of an electric motor.

One end section 3 of an S-shaped conductor 2 is connectable to the inverter and the other end section 4 of the conductor 2 is connectable to the electric motor.

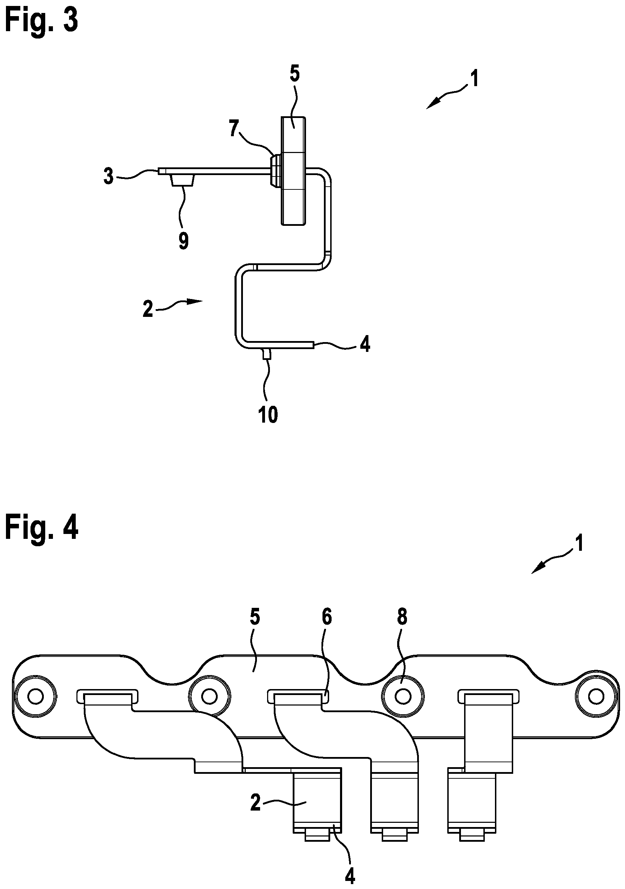

Fig. 3 is a side view of the connector 1 and shows that the conductors 2 are S-shaped and arranged in parallel. Each conductor 2 comprises five bent sections, wherein the bending angle between two adjacent sections is at least approximately a right angle.

A holder 5 is used for fixing all three conductors 2. Each end section 3 of a conductor 2 at the inverter side extends through a hole 6 of the holder 5. In the holder 5 the conductors 2 are arranged spaced from each other. A s

The holder 5 is manufactured by encapsulating the conductors 2 with a plastic material. At the inverter side of the holder 5 each conductor 2 is surrounded by a sealing 7. The sealing 7 prevents that debris like oil or cooling fluid from the electric motor can enter the inverter through the connector 1.

This sealing 7 is also configured to cover the hole 6. Between the holder 5 and the sealing 7 it can be added additional sealing material (not shown). This additional sealing material can be solid or liquid (not shown) and can also prevents that debris like oil or cooling fluid from the electric motor can enter the inverter through the connector 1.

Between the sealing 7 and the conductor 2, other additional sealing material (not illustrated) can be also added to prevent debris from the motor enter into the inverter. Opposite to the sealings 7 the holder 5 comprises indentations 8 with a circular hole, so that the holder 5 can be mounted on a housing by screws.

End sections 3 at the inverter side of the conductors 2 are provided with a fastening means in the form of thread nut 9, which is attached at a lower side of the end section 3. The thread nut 9 can for example be welded or assembled by press fit to the end section 3. The conductors 2 can be screwed together with an HV AC busbar of an inverter using the thread nuts 9.

In Fig. 1 it is visible that end sections 4 at the motor side of the conductors 2 have a fork-like shape, wherein an angled central section 10 is arranged between two outer prong-like sections 11, 12. This special shape of the end sections 4 facilitates positioning the connector 1 with regard to hairpins of an electric motor, to which the end sections 4 can be welded.

The connector 1 provides a compact interface between an electric motor and an inverter which can be pre-assembled and subsequently welded to stator hairpins of an electric motor. The connector 1 can be attached to the driving end side of an electric motor as well as to the non-driving end side. As the busbar is short compared to conventional designs cost savings can be achieved as less copper is necessary.

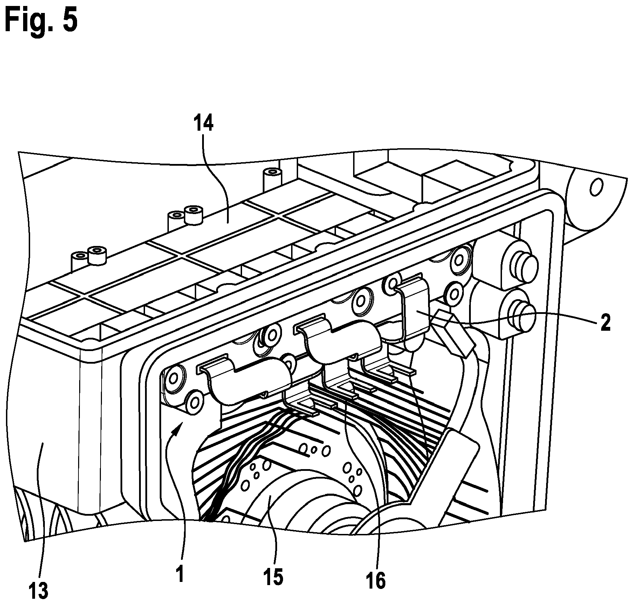

Fig. 5 shows a detail of an arrangement comprising an electric motor and an inverter. The connector 1 is arranged in a central housing 13 in which an inverter 14 and an electric motor 15 are received. The electric motor 15 comprises a rotor, which is surrounded by a stator with stator windings and hairpins 16. In the installed state the end sections 4 of the conductors 2 are welded to hairpins 16. The other end of the conductors 2, which is not visible in Fig. 5, is connected with the inverter 14 by screws.

Due to the compact shape of the connector 1 an impregnation and dipping process of the electric motor 15 can be performed when the connector 1 is welded to the stator.

### List of reference numbers

- 1: connector
- 2: conductor
- 3: end section
- 4: end section
- 5: holder
- 6: hole
- 7: sealing
- 8: indentation
- 9: thread nut
- 10: central section
- 11: prong-like section
- 12: prong-like section
- 13: central housing
- 14: inverter
- 15: electric motor

## Claims

1. Connector (1) for electrically connecting an electric motor (15) and an inverter (14), comprising several conductors (2), wherein each conductor (2) is assigned to a phase of the electric motor (15), **characterized in that** the conductors (2) are S-shaped, wherein one end section (3) of a conductor (2) is connectable to the inverter (14) and the other end section (4) of the conductor (2) is connectable to the electric motor (15).

2. Connector according to claim 1, wherein an S-shaped conductor (2) comprises four or five bent sections, wherein the bending angle between two adjacent sections is at least approximately a right angle.

3. Connector according to claim 1 or 2, wherein the end sections (3) of each conductor (2) extend through a holder (5), in which the conductors (2) are arranged spaced from each other.

4. Connector according to claim 3, wherein the holder (5) is manufactured by encapsulating the conductors (2) with a plastic material.

5. Connector according to claim 3 or 4, wherein the holder (5) comprises a sealing for each conductor (2).

6. Connector according to any of the preceding claims, wherein a fastening means, in particular a thread or a thread nut (9), is provided on end sections (2) on the inverter side of the conductors (2).

7. Connector according to any of the preceding claims, wherein end sections (4) on the motor side have a fork-like shape, wherein an angled central section (10) is arranged between two outer prong-like sections (10, 11).

8. Arrangement, comprising an electric motor (15) and an inverter (14), which are electrically connected by a connector (1) according to any one of claims 1 to 7.

9. Arrangement according to claim 8, wherein the electric motor (15) and the inverter (14) are connected directly, without an interposed busbar.

10. Arrangement according to claim 8 or 9, wherein end sections (3) on the inverter side of the conductors (2) are connected to the inverter (14) by screw connections and/or wherein end sections (4) on the motor side of the conductors (2) are welded to hairpins of a stator of the electric motor (15).

11. Arrangement according to any one of claims 8 to 10, wherein motor (15) and inverter (14) are received in a central housing (13), wherein the connector (1) closes and seals an opening of the central housing (13).

12. Arrangement according to any one of claims 8 to 11, wherein at least a part of the connector (1) is impregnated by dipping into a coating bath.
